# EUROPÄISCHE PATENTSCHRIFT

(11) **EP 1 821 044 B1**
(45) Veröffentlichungstag und Bekanntmachung des Hinweises auf die Patenterteilung: **30.06.2010**
(21) Anmeldenummer: 06003324.8
(22) Anmeldetag: 17.02.2006
(51) Int. Cl.: F24F 12/00, F02G 5/04

(54) **Vorrichtung und Verfahren zur thermischen Stromerzeugung**
Device and method for producing electricity by using heat
Dispositif et méthode de production de courant électrique par usage de chaleur

(43) Veröffentlichungstag der Anmeldung: 22.08.2007
(73) Patentinhaber: Heinz Schilling KG, 47906 Kempen (DE)
(72) Erfinder: Schilling, Heinz, 47906 Kempen (DE)
(74) Vertreter: COHAUSZ DAWIDOWICZ HANNIG & SOZIEN

(56) Entgegenhaltungen:
- EP-A- 0 070 545
- EP-A- 0 981 035
- WO-A-87/05683
- FR-A- 2 720 566
- US-A- 4 715 192
- LIU X H ET AL: "COMBINED COGENERATION AND LIQUID-DESICCANT SYSTEM APPLIED IN A DEMONSTRATION BUILDING" ENERGY AND BUILDINGS, LAUSANNE, CH, Bd. 36, Nr. 9, September 2004 (2004-09), Seiten 945-953, XP008063299 ISSN: 0378-7788
- PATENT ABSTRACTS OF JAPAN Bd. 2000, Nr. 26, 1. Juli 2002 (2002-07-01) -& JP 2001 266919 A (MATSUSHITA SEIKO CO LTD), 28. September 2001 (2001-09-28)
- PATENT ABSTRACTS OF JAPAN Bd. 2000, Nr. 24, 11. Mai 2001 (2001-05-11) -& JP 2001 196075 A (MATSUSHITA SEIKO CO LTD), 19. Juli 2001 (2001-07-19)

## Beschreibung

Die Erfindung betrifft eine Vorrichtung zur thermischen, insbesondere dezentralen Stromerzeugung mit einem zur Kühlung vorgesehenen Rückkühlkreislauf. Die Erfindung betrifft weiterhin ein Verfahren zur Kühlung einer derartigen Vorrichtung.

Zur thermischen Stromerzeugung sind vielfältige Vorrichtungen unterschiedlicher Bauarten, wie z.B. dampfkraftbetriebene, motorbetriebene, direkt wirkende Gasturbinen, Sterlingmotoren oder auch Brennwertzellen bekannt. Im Wesentlichen kommen zur dezentralen Stromerzeugung zur Zeit Anlagen zur Kraftwärmekopplung (KWK) als Blockheizkraftwerke (BHKW) zum Einsatz.

Das Grundprinzip beruht darauf, die thermische Differenz zweier Prozessniveaus, d.h. der im Erzeugungsprozess vorkommenden höchsten und niedrigsten Prozesstemperatur (Exergie hin zur Anergie) zu nutzen, wobei üblicherweise dieses so bestehende Wärmepotential zunächst in mechanische Energie und mittels nachgeschaltetem Generator in Strom umgewandelt wird. Hierbei ist es weiterhin bekannt, die dabei entstehende Abwärme gegebenenfalls für eine weitere Wärmenutzung zu verwenden.

Die Verstromungswirkungsgrade sind hierbei im Wesentlichen abhängig von der Höhe der erreichten Temperaturdifferenz zwischen den einzelnen Prozessniveaus und insoweit im Wesentlichen von der so genannten Exergie bzw. deren Differenz.

Je nach Brennstoffart können dabei mit modernen Kraftwerkstechnologien Verstromungswirkungsgrade zwischen 45 und 55% erreicht werden. Für die dezentrale Stromerzeugung, insbesondere mit gleichzeitiger Wärmenutzung liegen diese Werte zur Zeit nur bei etwa 25% bis maximal 40%. Da für die Großkraftwerke in der Regel die Abfallwärme nicht nutzbar ist, da beispielsweise kraftwerksnahe Verbraucher fehlen, eine solche Nutzung jedoch bei der dezentralen Stromerzeugung angestrebt wird, kann im letzteren Fall trotz der üblicherweise niedrigeren Verstromungswirkungsgrade ein energetischer Gesamtwirkungsgrad (aus Wärme und Strom) von zumindest zeitweise bis zu 80% erreicht werden.

Die dezentralen Stromerzeuger, in der Regel kombiniert mit Wärmenutzung, aber auch für Wärme und Kraft für mechanische Kälteerzeugung oder Wärme-/Wärme-Absorberkältenutzung, sind äußerst vielfältig. Keines dieser Systeme erbrachte bisher jedoch einen Marktdurchbruch, bei dem über Stückzahlen und Umsatz eine durchdachte Ausgestaltung mit konsequenter Modultechnik und katalogmäßiger Marktreife hätte entstehen können.

Die sinnvolle Nutzung der fossilen Brennstoffe oder anderer thermischer Potentiale scheitert dabei im Wesentlichen an der Wirtschaftlichkeit solcher Anlagen. Im Vergleich zu moderner Kraftwerkstechnologie und einer gleichzeitig flächendeckend zur Verfügung stehenden Infrastruktur einer funktionierenden Stromversorgung ist die dezentrale Stromerzeugung fast unaufholbar teuer.

Will man eine energetisch hohe Ausbeute pro Brennstoffeinheit erreichen, so werden die Anlagen rein wärmegeführt betrieben und erreichen so nicht die notwendigen Betriebsstunden, um eine Rentabilität zu erreichen. Ein anderer Teil ist stromgeführt, wobei es Probleme gibt, vor allem zur Beseitigung der anfallenden Abwärme, da hoher Strombedarf nicht unbedingt mit der möglichen Nutzung der Abwärme übereinstimmt und zur Beseitigung dieser Abwärme zusätzliche Anlagentechnik und Betriebskosten entstehen.

Außerdem ist für eine reine dezentrale Stromerzeugung ohne Wärmenutzung energetisch gesehen kein Vorteil vorhanden, zumal die Wirkungsgrade in großen Kraftwerken beträchtlich höher sind und damit ein Strombezug über das vorhandene Stromnetz wirtschaftlich und energetisch sinnvoller erscheint.

Dem will man dadurch begegnen, dass die Wärme im Sommer über die sogenannte Absorbertechnik gleichzeitig zur Kältegewinnung verwendet wird. Dies hat jedoch den Nachteil, dass die gleiche Abwärmemenge nicht mehr auf einem hohen Temperaturniveau von z.B. 35 / 45 Grad Celsius, sondern jetzt auf einem extrem niedrigen Temperaturniveau von z.B. 25 / 30 Grad Celsius mit geringer Spreizung vorhanden ist. Der erdachte Vorteil der Wärmenutzung zur Kälteerzeugung wird somit meist durch zusätzliche und aufwendigere Rückkühlsysteme mit ebenfalls hohen Betriebs- und Wartungskosten aufgezehrt.

Wie aus dem Großkraftwerksbau bekannt, ist der Wirkungsgrad bei der Stromerzeugung im Wesentlichen von der Exergie-Differenz (Differenz zwischen der so genannten Exergie und der so genannten Anergie) vorbestimmt. Dabei kann das untere Prozess-Temperaturniveau durch geeignete Rückkühlsysteme z.B. in Verbindung mit natürlichen Gewässern, Flussläufen oder mit einer adiabaten Verdunstungskühlung gesenkt werden, was sich wirkungsgraderhöhend auswirkt.

Kommen hier z.B. Rückkühlsysteme mit adiabater Verdunstungskühlung zum Einsatz können ganzjährig Kühltemperaturen kleiner 25 Grad Celsius erzeugt bzw. zur Verfügung gestellt werden.

Im Stand der Technik (WO 87/05683, EP 0 070 545) ist es weiterhin bekannt, Gebäude jeglicher Art mit luft- und/oder klimatechnischen Anlagen mit wenigstens einem mechanischen Abluft- und/oder Zuluftstrom auszustatten, um einen Luftaustausch zu bewirken. Hierbei wird zur Energieeinsparung häufig auch auf Wärmerückgewinnungssysteme, wie z.B. auf so genannte Kreislaufverbundsysteme, zurückgegriffen. Sinn und Zweck eines solchen Systems ist es, bei einem notwendigen Luftaustausch innerhalb des Gebäudes im Winter der Fortluft Wärme zu entziehen und diese entzogene Wärme auf die kältere Außenluft zu übertragen.

Hierfür werden dementsprechend üblicherweise wenigstens ein Fortluftwärmetauscher eingesetzt, in dem die Wärme der Fortluft entzogen und auf ein Fluid übertragen wird, wobei dieses Fluid einem Zuluftwärmetauscher zugeführt wird, über den frische Zuluft in das Gebäude eingeleitet wird. So kann diese kältere frische Zuluft, die mittels des Fluids erwärmt wurde, in das Gebäude eingeleitet werden. Das hierdurch abgekühlte Fluid wird sodann dem Fortluftwärmetauscher erneut zugeführt. Hierdurch ergibt sich ein Kreislauf des strömenden Fluids zwischen Fortluft- und Außenluftwärmetauscher. Ein derartiges System wird auch als Kreislaufverbundsystem bezeichnet.

Aufgabe der Erfindung ist es, eine Vorrichtung und ein Verfahren bereitzustellen, mittels dem effizient und auf wirtschaftlich einfache Art und Weise eine Rückkühlung einer Vorrichtung zur insbesondere dezentralen Stromerzeugung erreicht wird. Hierbei soll insbesondere auf bestehende Ressourcen in einem Gebäude, in welchem eine Stromerzeugung stattfinden soll, zurückgegriffen werden.

Diese Aufgabe wird dadurch gelöst, dass die Abwärme einer Vorrichtung zur thermischen und insbesondere dezentralen Stromerzeugung insbesondere im Sommer an einen ohnehin vorhandenen Fortluftstrom oder insbesondere im Winter an einen ohnehin vorhandenen Außenluftstrom von ohnehin vorhandenen luft- und/oder klimatechnischen Anlagen eines Gebäudes, insbesondere mit einer im Kreislaufverbund angeordneten Wärmerückgewinnungsanlage überführt wird.

Dies kann konstruktiv in einfacher Weise dadurch erreicht werden, dass eine Vorrichtung zur thermischen, insbesondere dezentralen Stromerzeugung, welche einen zur Rückkühlung vorgesehenen Rückkühlkreislauf aufweist, derart ausgestaltet ist, dass der Rückkühlkreislauf dieser Vorrichtung durch einen Wärmetauscher verläuft, der in einem Abluft- und/oder Zuluftstrom eines Gebäudes angeordnet ist, insbesondere je nachdem, ob ein Betrieb im Sommer oder im Winter stattfindet.

So kann die bestehende lüftungs- bzw. klimatechnische Infrastruktur eines Gebäudes zur Rückkühlung der Vorrichtung und ggfs. gleichzeitig zur Wärmenutzung genutzt werden.

Sind die luft- und/oder klimatechnischen Anlagen eines Gebäudes mit Kreislaufverbund-Wärmerückgewinnungssystemen ausgestattet, so kann besonders vorteilhaft der Fluidkreislauf der Vorrichtung zur Stromerzeugung zumindest zum Teil gebildet werden durch dieses Wärmerückgewinnungssystem bzw. dessen Fluidleitungen, welches wenigstens einen Fortluft- und einen Zuluftwärmetauscher bzw. Außenluftwärmetauscher aufweist, die im Kreislaufverbund angeordnet sind.

Wesentlicher Grundgedanke der Erfindung ist es daher, zur Rückkühlung einer Stromerzeugungsvorrichtung das Kühlpotential von ohnehin vorhandenen lüftungstechnischen Anlagen in einem Gebäude bereitzustellen, insbesondere dadurch, dass über Kreislaufverbund-Wärmerückgewinnungssysteme vorrangig die Abwärme zur Erwärmung kalter Außenluft und / oder nachrangig zur Ableitung der Abwärme über relativ kalte Fortluft z.B. 22 - 28 Grad Celsius dient.

So kann dieser Kühlluftstrom entweder gebildet werden durch den Abluft- bzw. Fortluftstrom, insbesondere einer Wärmerückgewinnungsanlage bzw. auch durch den Zuluft- bzw. Frischluftstrom. Dies hängt im Wesentlichen von der Betriebsart der Lüftungsanlage, insbesondere der Wärmerückgewinnungsanlage ab, z.B. ob die Anlage im Winter oder Sommer für die Kühlung einer Vorrichtung zur Stromerzeugung eingesetzt wird.

Dies hat den Vorteil, dass grundsätzlich bei Betrieb und Nutzung des Gebäudes auch die Stromerzeugungsvorrichtung eines solchen Gebäudes in Volllast oder einer auf ein minimales Kühlpotential ausgelegte Teillast in Betrieb ist bzw. sein kann, wobei der erzeugte Strom selbst genutzt werden kann, d.h. innerhalb des Gebäudes zum Einsatz kommt oder auch in ein Netz eingespeist wird.

Es kann so das Kältepotential der Fortluft, oder gegebenenfalls der Außenluft zur Erhöhung der Exergie-Differenz und damit zur Erhöhung des Verstromungswirkungsgrades genutzt werden. So kann ein Lüftungssystem und besonders bevorzugt ein im Kreislaufverbund stehendes Wärmerückgewinnungssystem, welches gegebenenfalls ohnehin in einem Gebäude vorhanden ist, neben seiner eigentlichen Funktion eine weitere Funktion dahingehend übernehmen, dass überschüssige Wärme der Stromerzeugungseinheit über dieses System genutzt oder abgeführt wird.

So kann die Wärme beispielsweise dem Fortluftstrom eines Gebäudes aufgeschaltet werden, welches bevorzugt in einem Sommerbetrieb erfolgt, wobei dann die Fortluft mit einer erhöhten statt der üblichen Temperatur das Gebäude verlässt oder gegebenenfalls in einem Winterbetrieb direkt auf die Außenluft aufgeschaltet werden, so dass auch die Möglichkeit besteht, durch die Abwärme der Stromerzeugungsvorrichtung das Gebäude zu beheizen.

Es kann hier verfahrensgemäß vorgesehen sein, dass die Abwärme einer Vorrichtung zur Stromerzeugung mittels eines Kühlfluids, auf welches diese Wärme in der Vorrichtung aufgeschaltet wird, z.B. über eine Plattenwärmetauscher-Systemtrennung in den Fluidzulauf eines Fortluftwärmetauschers oder aber in den Fluidzulauf eines Zuluftwärmetauschers überführt werden, je nach Anwendungsfall bzw. jahreszeitlichem Betrieb.

Dies kann z.B. dadurch erfolgen, dass die Vorrichtung zur insbesondere dezentralen Stromerzeugung wenigstens eine erste Fluidleitung umfasst, mittels der Kühlfluid der Vorrichtung zuführbar ist und wenigstens eine zweite Fluidleitung, mittels der Abwärme führendes Kühlfluid von der Vorrichtung wegleitbar ist, wobei diese Fluidleitungen in der Regel über einen Plattenwärmetauscher mit Systemtrennung (Wassersysteme / Wasserglykolsysteme) mit den Leitungen des betreffenden Wärmetauschers und insbesondere mit einem Kreislaufverbund eines Wärmerückgewinnungssystems in Verbindung stehen.

Hierbei wird es als vorteilhaft verstanden, wenn der systemtrennende Plattenwärmetauscher in Reihe oder parallel zu einem Wärmetauscher des Wärmerückgewinnungssystems schaltbar ist. Hierdurch kann im Wesentlichen erreicht werden, dass die Abwärme entweder über den Fortluftwärmetauscher oder den Zuluftwärmetauscher abgeführt wird, d.h. entweder der Fortluft oder der Außenluft aufgeschaltet wird.

Das Kühlpotential führende Fluid aus dem Wärmerückgewinnungs-Kreislaufverbundsystem wir dem Plattenwärmetauscher zur Systemtrennung zugeführt und das Abwärme führende Fluid mittels einer Umschaltung, insbesondere eines Dreiwegeventils, je nach Wärmebedarf in der Außenluft dem Fluidzulauf des Außenluft-Wärmetauschers oder soweit kein Wärmebedarf vorliegt, direkt zum Fortluft-Wärmetauscher zugeführt.

In einer ergänzenden bevorzugten Ausgestaltung kann es zusätzlich vorgesehen sein, dass zur Wärmeaufnahme aus dem Plattenwärmetauscher nicht das Kühlpotential führende Fluid aus der Fortluftanlage, sondern das ggfs. Kühlpotential führende Fluid aus dem Außenluft-Wärmetauscher über eine Umschaltung eines Dreiwegeventils verwendet wird.

Ergänzend kann es vorgesehen sein, im Abgasstrom weitere Wärmetauscher vorzusehen, um die Abwärme im Abgasstrom für weitere Heizzwecke, gegebenenfalls auch zum Vorheizen, derjenigen Luft zu verwenden, die in der Vorrichtung zur Stromerzeugung in einer Brennkammer zum Verbrennen eines Brennstoffes eingesetzt wird.

Die erfindungsgemäße Vorrichtung hat den Vorteil, dass sie kühlluftgeführt ausgelegt werden kann und somit wahlweise je nach wirtschaftlichen, energieeffizienten bzw. netzeffizienten Anforderungen jederzeit nach Bedarf wärmegeführt, stromgeführt oder netzgeführt betreibbar ist.

Hierbei bedeutet kühlluftgeführt bzw. kühlpotentialgeführt, dass je nach Rückkühlpotential über die ohnehin vorhandene Lüftungsanlage auf das jeweils betriebsminimale Gesamt-Kühlpotential aus der möglichen Lufterwärmung und/oder aus der möglichen Abwärmeableitung über die Fortluft ausgelegt oder in entsprechenden Stufen bzw. Teilleistungen geschaltet werden kann.

Ein Ausführungsbeispiel der Erfindung ist in der nachfolgend diskutierten Figur näher beschrieben.

Die Figur zeigt ein Gebäude G mit mehreren Etagen, in welchem eine luft- und klimatechnische Anlage mit integriertem Kreislaufverbund-Wärmerückgewinnungsystem installiert ist und die Wärmetauscher W1 und W2, die diese verbindenden Fluidleitungen 1 und 2 und den Plattenwärmetauscher PWT aufweist.

Für einen üblichen Wärmerückgewinnungsbetrieb kann dieses im Kreislaufverbund angeordnete System eingesetzt werden, um z.B. in einem Winterbetrieb die Abluft A durch den Wärmetauscher W1 und dann als Fortluft 4 nach außen zu führen. Hierbei wird in dem Wärmetauscher W1 dieser Abluft bzw. Fortluft 4 die Wärme entzogen und über das Wärmeträgerfluid, welches in den Leitungen 1 und 2 zirkuliert, zunächst über die Leitung 1 zum Wärmetauscher W2 geführt, der von Außenluft 3 angeströmt wird, hier insbesondere mittels eines Gebläses 14, wobei die Wärme von dem Fluid aus der Leitung 1 an die Außenluft 3 übertragen und sodann die erwärmte Außenluft in das Gebäude abgegeben wird. Das hierdurch abgekühlte Fluid strömt sodann über die Leitung 2 zurück in den Wärmetauscher W1, wo der Kreislauf von vorne beginnt. Ein derartiges Wärmerückgewinnungssystem kann demnach wie im Stand der Technik hinreichend bekannt, in üblicher Weise betrieben werden.

Das Gebäude G weist hier weiterhin eine Vorrichtung zur dezentralen Stromerzeugung auf, welche in diesem nicht beschränkenden Beispiel im Wesentlichen eine Brennkammer 9 umfasst, in der Brennstoff 13 zusammen mit einer über das Gebläse 10 zugeführten Luft verbrannt wird, wobei der Abgasstrom einer Gasturbine 6 zugeführt wird und sodann dieser Abgasstrom 12 über einen Schornstein das Gebäude verlässt. Die Gasturbine treibt hierbei einen Generator 11 an.

Um einen möglichst hohen Verstromungswirkungsgrad zu erreichen, ist es hier vorgesehen, eine Kühlung zumindest der Gasturbine 6, gegebenenfalls auch weiterer Abwärme produzierender Teile dieser Vorrichtung vorzunehmen. Hierzu wird die Gasturbine 6 bei diesem konkreten Ausführungsbeispiel in einen Rückkühlkreislauf eingebunden, wobei in diesem Rückkühlkreislauf gemäß der Abbildung über die Leitungen 7a und 7b ein systemtrennender Plattenwärmetauschern PWT eingebunden ist.

Erkennbar ist hier, dass Kühlfluid, welches Abwärme aus der Gasturbine aufgenommen hat, durch die Leitungen 7a zum Plattenwärmetauscher PWT geführt wird, wobei dort die Abwärme an das Wärmeträgerfluid im Kreislaufverbund übertragen wird und nach der Übertragung durch die Leitung 7b zur Gasturbine 6 zurückgeführt wird.

In einem ersten Anwendungsfall kann über das Dreiwegeumschaltventil 8 das Wärmeträgerfluid des Kreislaufverbundsystems nach der Wärmeübertragung im Plattenwärmewärmetauscher PWT in die Leitung 2 des Kreislaufverbunds überführt werden, wodurch das die Abwärme tragende Wärmeträgerfluid sodann in den Wärmetauscher W1 gelangt, um die Abwärme an die Fortluft 4 zu übertragen. Das sodann hierdurch gekühlte Wärmeträgerfluid gelangt über die Leitung 1 zurück zu einem Abzweig in der Leitung 1, von dem aus es wieder in den Plattenwärmetauscher PWT gelangt, um erneut Abwärme der Gasturbine 6 aufzunehmen.

In einer alternativen Ausgestaltung kann auch eine Umschaltung des Ventils 8 vorgesehen sein, um das die Abwärme tragende Wärmeträgerfluid direkt in die Leitung 1 des Kreislaufverbunds einzukoppeln und sodann die Abwärme in den Wärmetauscher W2 zu überführen und auf die angesaugte Außenluft 3 aufzuschalten. Es wird sodann die kühlere Außenluft 3 erwärmt und in das Gebäude eingeführt. So kann hier insbesondere mittels des Umschaltventils 8, welches als Dreiwegeventil ausgestaltet sein kann, zwischen einer Sommer- oder Winterbetriebsart der Anlage umgeschaltet werden.

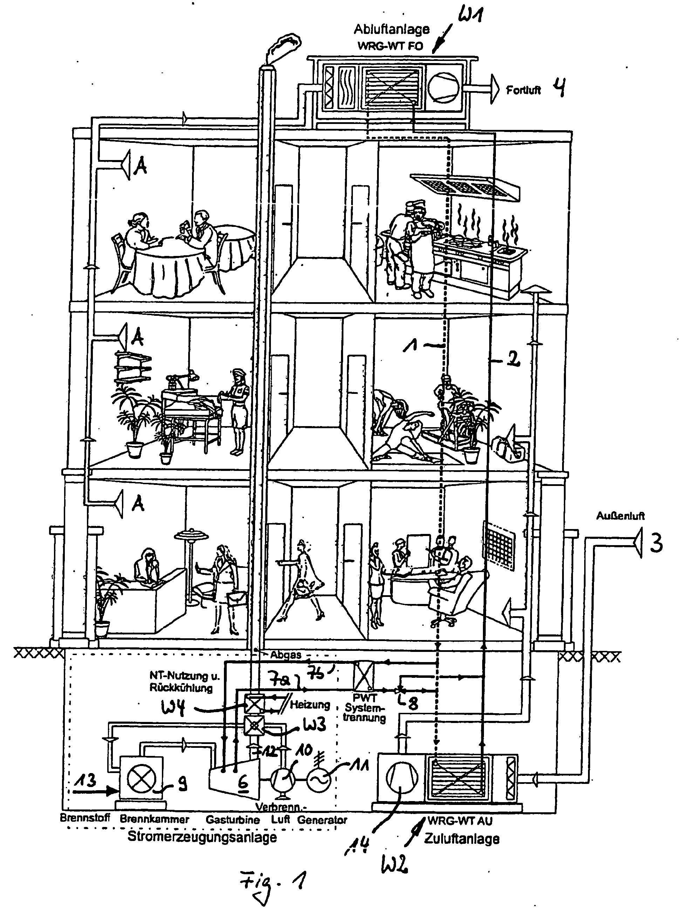

Die Figur 1 zeigt darüber hinaus noch weitere Wärmetauscher W3 und W4, wobei mit dem Wärmetauscher W3 vorrangig eine Vorerwärmung der mittels des Gebläses 10 angesaugten Verbrennungsluft für die Brennkammer 9 erfolgen kann und wobei mit dem Wärmetauscher W4 die Abgas-Restwärme dem Abgasstrom für ein hier nicht gezeigtes Heizungssystem entzogen werden kann.

Die Figur 1 zeigt weiterhin noch die Möglichkeit vor dem Fortluftwärmetauscher noch eine Einheit 15 zur adiabatischen Verdunstungskühlung vorzusehen, um die Abluft vor dem Durchgang durch den Wärmetauscher W1 adiabatisch zu kühlen und so ein erhöhtes Kältepotential vorrangig für die Außenluftkühlung und nachrangig für die Vorrichtung zur Stromerzeugung zu erzielen.

Hier wird ersichtlich deutlich, dass bei der entsprechenden Anordnung von einer Vorrichtung zur Stromerzeugung und einer luft- und klimatechnischen Anlage mit integrierten Kreislaufverbund-WRG-Systemen die Energieeffizienz und Wirtschaftlichkeit ohne zusätzliche Applikationen gesteigert werden kann, da eine Rückkühlung der Vorrichtung zur Stromerzeugung mittels ohnehin vorhandener lüftungstechnischer Anlage und Wärmerückgewinnungsanlage durchgeführt wird, wobei entweder die Abwärme an die Umgebung abgegeben wird, welches im Sommerbetriebsfall sinnvoll erscheint oder aber zur Aufwärmung von Außenluft und damit zur Erwärmung des Gebäudes genutzt wird, was insbesondere im Winterfall sinnvoll ist.

## Patentansprüche

1. Vorrichtung zur thermischen Stromerzeugung umfassend einen Stromerzeuger mit einem zur Rückkühlung vorgesehenen Fluidkreislauf, **dadurch gekennzeichnet, dass** es eine luft- und/oder klimatechnische Anlage eines Gebäudes mit im Kreislaufverbund stehendem Wärmerückgewinnungssystem umfasst mit einem Fortluftwärmetauscher, in dem Wärme der Fortluft eines Gebäudes entziehbar und auf ein Fluid übertragbar ist, wobei dieses Fluid im Kreislauf einem Zulufhnrärmetauscher zuführbar ist zur Erwärmung der durch diesen Zuluftwärmetauscher in das Gebäude einleitbaren Zuluft und wobei im zur Rückkühlung des Stromerzeugers vorgesehenen Fluidkreislauf (6, 7a, 7b, PWT) ein Plattenwärmetauschers (PWT) zur Systemtrennung angeordnet ist, mit dem die Abwärme des Stromerzeugers auf das Fluid des im Kreislaufverbund stehenden Wärmerückgewinnungssystem (W1, 1, W2, 2) übertragbar ist, wobei über wenigstens ein Dreiwegeventil (8) die Fluidleitung (1,2) des Kreislaufverbund-Wärmerückgewinnungssystems (W1, 1, W2, 2) so schaltbar ist, dass die übertragene Abwärme entweder zu Heizzwecken in die Fluidzuleitung (1) des Zuluftwärmetauschers (W2) oder zur Ableitung über den Fortluftstrom (4) in die Fluidzuleitung (2) des Fortluftwärmetauschers (W1) leitbar ist.

2. Vorrichtung nach Anspruch 1, **dadurch gekennzeichnet, dass** der Plattenwärmetauscher zur Systemtrennung in Reihe oder parallel zu einem Wärmetauscher (W1,W2) des Wärmerückgewinnungssystems schaltbar ist.

3. Vorrichtung nach einem der vorherigen Ansprüche, **dadurch gekennzeichnet dass** sie zumindest in Teilleistung kühlluftgeführt ausgelegt und/oder schaltbar ist, womit sie wahlweise wärmegeführt, stromgeführt oder netzgeführt betreibbar ist.

4. Vorrichtung nach einem der vorherigen Ansprüche, **dadurch gekennzeichnet, dass** sie zumindest im Teilbereich kühlpotentialabhängig ausgelegt, in Teil- oder Volllast schaltbar ist und wärmegeführt, stromgeführt oder netzgeführt betreibbar ist.

5. Verfahren zur Rückkühlung eines Stromerzeugers zur thermischen Stromerzeugung, **dadurch gekennzeichnet, dass** die Abwärme des Stromerzeugers aus einem zur Rückkühlung dieses Stromerzeugers vorgesehenen Fluidkreislauf (6, 7a, 7b, PWT) mittels eines Plattenwärmetauschers (PWT) zur Systemtrennung auf das Fluid eines im Kreislaufverbund stehenden Wärmerückgewinnungssystem (W1, 1, W2, 2) eines Gebäudes übertragbar ist, welches einen Fortluftwärmetauscher aufweist, in dem Wärme der Fortluft des Gebäudes entziehbar und auf ein Fluid übertragbar ist, wobei dieses Fluid im Kreislauf einem Zuluftwärmetauscher zuführbar ist zur Erwärmung der durch diesen Zuluftwärmetauscher in das Gebäude einleitbaren Zuluft, wobei über wenigstens ein Dreiwegeventil (8) die Fluidleitung (1,2) des Kreislaufverbund-Wärmerückgewinnungssystems (W1, 1, W2, 2) so geschaltet wird, dass die übertragene Abwärme entweder zu Heizzwecken in die Fluidzuleitung (1) des Zuluftwärmetauschers (V112) oder zur Ableitung Ober den Fortluftstrom (4) in die Fluidzuleitung (2) des Fortluftwarmetauschers (W1) geleitet wird.

## Claims

1. A device for producing electricity by using heat, comprising an electricity generator with a fluid circuit provided for recooling, **characterised in that** comprises a ventilation and/or air-conditioning system of a building with a heat recovery system in a circulation unit, with an exhaust air heat exchanger in which heat can be extracted from the exhaust air of a building and transferred to a fluid, wherein this fluid can be fed in the circuit to a supply air heat exchanger for heating the supply air that can be fed through this supply air heat exchanger into the building, and wherein a plate-type heat exchanger (PWT) is arranged in the fluid circuit (6, 7a, 7b, PWT) provided for recooling the electricity generator for system separation, with which exchanger the waste heat from the electricity generator can be transferred to the fluid of the heat recovery system (W1, 1, W2, 2) in the circulation unit, wherein the fluid pipe (1, 2) of the circulating unit heat recovery system (W1, 1, W2, 2) can be connected by at least one three-way valve (8) so that the transferred waste heat can be conducted either for heating purposes into the fluid supply pipe (1) of the supply air heat exchanger (W2) or for discharge pipes via the exhaust air flow (4) into the fluid supply pipe (2) of the exhaust air heat exchanger (W1).

2. The device according to claim 1, **characterised in that** the plate-type heat exchanger can be connected in series or in parallel, for system separation, to a heat exchanger (W1, W2) of the heat recovery system.

3. The device according to any one of the preceding claims, **characterised in that**, at least in partial power, is designed and/or is switchable with cooling air guidance, with which it can be operated optionally on a heat-, current- or mains-controlled basis.

4. The device according to any one of the preceding claims, **characterised in that**, at least in sections, it is designed so that it is dependent on cooling potential, can be switched to partial or full load, and can be operated on a heat-, current- or mains-controlled basis.

5. A method for recooling an electricity generator for producing electricity by using heat, **characterised in that** the waste heat of the electricity generator can be extracted from a fluid circuit (6, 7a, 7b, PWT) provided for recooling this electricity generator, by means of a plate-type heat exchanger (PWT) for system separation, to the fluid of a heat recovery system (W1, 1, W2, 2) of a building in a circulating unit, which has an exhaust air heat exchanger in which heat can be extracted from the exhaust air of the building and transferred to a fluid, wherein this fluid can be fed in the circuit to a supply air heat exchanger for heating the supply air that can be fed into the building by this supply air heat exchanger, wherein the fluid pipe (1, 2) of the circulating unit heat recover system (W1, 1, W2, 2) is switched by at least one three-way valve (8) so that the transferred waste heat is conducted either for heating purposes into the fluid supply pipe (1) of the supply air heat exchanger (W2) or for the purpose of discharge via the exhaust air flow (4) into the fluid supply pipe (2) of the exhaust air heat exchanger (W1).

## Revendications

1. Dispositif de génération de courant thermique comportant une génératrice avec un circuit fluidique prévu pour le recyclage, **caractérisé en ce qu'**il comporte une installation aéraulique et/ou climatisée d'un bâtiment avec un système de récupération de la chaleur se trouvant en liaison de circuit avec un échangeur de chaleur d'air d'échappement, dans lequel de la chaleur peut être extraite de l'air d'échappement d'un bâtiment et transmise à un fluide, ce fluide pouvant être amené dans le circuit à un échangeur de chaleur d'air frais pour réchauffer l'air frais pouvant être introduit par cet échangeur de chaleur d'air frais dans le bâtiment et un échangeur de chaleur à plaques (PWT) étant disposé dans le circuit fluidique (6, 7a, 7b, PWT) prévu pour le recyclage de la génératrice pour la séparation du système, avec lequel la chaleur perdue de la génératrice peut être transmise au fluide du système de récupération de chaleur (W1, 1, W2, 2) se trouvant en liaison de circuit, par au moins une soupape à trois voies (8) pouvant être activée la conduite fluidique (1, 2) du système de récupération de chaleur de liaison de circuit (W1, 1, W2, 2) de telle sorte que la chaleur perdue transmise puisse être conduite à des fins de chauffage dans la conduite d'alimentation fluidique (1) de l'échangeur de chaleur d'air frais (W2) ou à des fins de dérivation par le courant d'air d'échappement (4) dans la conduite d'alimentation fluidique (2) de l'échangeur de chaleur d'air d'échappement (W1).

2. Dispositif selon la revendication 1, **caractérisé en ce que** l'échangeur de chaleur à plaques peut être activé pour la séparation du système en série ou parallèlement à un échangeur de chaleur (W1, W2) du système de récupération de chaleur.

3. Dispositif selon l'une quelconque des revendications précédentes, **caractérisé en ce qu'**il est conçu et/ou peut être activé au moins en puissance partielle de manière guidée par l'air de refroidissement, avec quoi il peut être exploité au choix de manière guidée par la chaleur, le courant ou le secteur.

4. Dispositif selon l'une quelconque des revendications précédentes, **caractérisé en ce qu'**il est conçu au moins en zone partielle en fonction du potentiel de refroidissement, peut être commuté en charge partielle ou totale et peut être exploité de manière guidée par la chaleur, le courant ou le secteur.

5. Procédé de recyclage d'une génératrice pour la génération de courant thermique, **caractérisé en ce que** la chaleur perdue de la génératrice peut être transmise depuis un circuit fluidique (6, 7a, 7b, PWT) prévu pour le recyclage de cette génératrice à l'aide d'un échangeur de chaleur à plaques (PWT) pour la séparation du système au fluide d'un système de récupération de chaleur (W1, 1, W2, 2) se trouvant en liaison de circuit d'un bâtiment qui présente un échangeur de chaleur d'air d'échappement, dans lequel de la chaleur peut être extraite de l'air d'échappement du bâtiment et transmise à un fluide, ce fluide pouvant être amené dans le circuit à un échangeur de chaleur d'air frais pour réchauffer l'air frais pouvant être introduit par cet échangeur de chaleur d'air frais dans le bâtiment, par au moins une soupapes à trois voies (8) étant activée la conduite fluidique (1, 2) du système de récupération de chaleur de liaison de circuit (W1, 1, W2, 2) de telle sorte que la chaleur perdue transmise soit conduite à des fins de chauffage dans la conduite d'alimentation fluidique (1) de l'échangeur de chaleur d'air frais (W2) ou à des fins de dérivation par le courant d'air d'échappement (4) dans la conduite d'alimentation fluidique (2) de l'échangeur de chaleur d'air d'échappement (W1).
